# EUROPÄISCHE PATENTANMELDUNG

(11) **EP 4 521 614 A1**
(43) Veröffentlichungstag der Anmeldung: **12.03.2025**
(21) Anmeldenummer: 23195614.5
(22) Anmeldetag: 06.09.2023
(51) Int. Cl.: H02K 9/22, B66B 11/04, H02K 1/20

(54) **AUFZUGSANLAGE, VERFAHREN ZUR HERSTELLUNG EINER AUFZUGSANLAGE**

(71) Anmelder: INVENTIO AG, 6052 Hergiswil (CH)
(72) Erfinder: Visintin, Massimiliano, 8002 Zürich (CH); Hammer, Hans-Rudolf, 6030 Ebikon (CH)
(74) Vertreter: Inventio AG

(57) **Zusammenfassung**

Aufzugsanlage umfassend einen Aufzugsschacht, einen Fahrkorb und mindestens ein Gegengewicht, welche in dem Aufzugschacht angeordnet sind und über mindestens ein Tragmittel miteinander gekoppelt sind; mindestens ein Aufzugsantriebe; wobei das mindestens eine Tragmittel über den Aufzugsantriebs so verläuft, dass das Tragmittel mittels des Aufzugantriebs bewegbar ist, so dass der Fahrkorb und das mindestens ein Gegengewicht mittels Betreibens des Aufzugantriebs vertikal verlagerbar sind. Weiter umfassend eine Bremse mittels der der Fahrkorb und/oder das Gegengewicht abbremsbar und/oder feststellbar ist.

## Beschreibung

Die vorliegende Erfindung betrifft eine Aufzugsanlage mit wenigstens einem Aufzugsantrieb.

Aufzugsanlagen werden in vielen Anwendungen in Gebäuden und Fabriken verwendet für den Transport von Gütern oder Personen. Solche Aufzugsanlagen müssen zuverlässig und langlebig sein. Um die Installations- und Instandhaltezeit beziehungsweise -kosten zu verringern, ist es vorteilhaft, wenn die Komponenten der Aufzugsanlage möglichst leicht und klein gebaut sind, beziehungsweise ein gewisses Gewicht / Grösse nicht überschreiten.

Bekannte Aufzugsanlagen zum Transport von Personen oder Lasten umfassen eine Aufzugskabine, welche in einem Aufzugsschacht vertikal bewegt werden kann. Üblicherweise ist die Aufzugskabine über ein Tragmittel mit einem Gegengewicht verbunden. Ein Antrieb zum Bewegen der Aufzugskabine entlang einer Führungsschiene kann beispielsweise auf einem Antriebsaufbau in einem Schachtkopf des Aufzugsschachts oder in einem Maschinenraum oberhalb des Aufzugsschachts angeordnet sein.

Aufzugsanlagen weissen einenEine Aufzugsantrieb auf, der grundsätzlich einen Stator, einen Rotor, eine Reihe mechanischer Komponenten, die den Stator und den Rotor zusammenhalten, und ein Kühlsystem aufweist. Der Stator weist im Allgemeinen übereinander gestapelte Metallbleche auf, die mittels Laminierens miteinander verbunden werden können. Ausserdem kann der Stator schlitzförmige Wicklungsaufnahmen aufweisen, in die eine Statorwicklung eingelegt werden kann. Die Statorwicklung kann beispielsweise als Wechselstromwicklung ausgebildet sein. Der Rotor kann ähnlich wie der Stator mehrere übereinander gestapelte Metallbleche, insbesondere Eisenbleche, aufweisen, die ebenfalls mittels Laminierens miteinander verbunden werden können. Alternativ dazu kann der Rotor als massives, in anderen Worten einstückiges, Bauteil ausgebildet sein, d. h. als nicht-laminierter Rotor. Der Rotor kann entweder mit einer Wechselstrom- oder Gleichstromwicklung, oder mit Permanentmagneten und/oder spezifischen Flussbarrieren (Reluktanzmaschinen) ausgestattet sein. Bei den mechanischen Komponenten kann es sich um eine mechanische Struktur handeln, die den Stator und den Rotor zusammenhält und die die Rotation des Rotors um eine Drehachse des Aufzugsantriebs ermöglicht.

Das Kühlsystem ermöglicht, thermische Verluste in Form von Wärme, die beim Betrieb des Aufzugsantriebs entsteht, abzuführen, um die im Vorhergehenden erwähnten Bauteile unter entsprechenden zulässigen Temperaturgrenzen zu halten. Diese Grenzwerte können von für diese Bauteile verwendeten Materialien und deren Eigenschaften abhängen und/oder durch spezifische Normen oder Betriebsgrenzen vorgegeben sein.

Die am häufigsten für Aufzugsantriebe verwendete Konstruktion erfordert einen externen Rahmen, in anderen Worten ein Gehäuse, um den Stator und den Rotor aufzunehmen und um die erforderliche Steifigkeit und den allgemeinen IP-Schutz zu gewährleisten. In diesen Fällen kann der Rahmen aus mehreren Trägern bestehen, die über spezielle mechanische Schnittstellen mit dem Stator verbunden sind. In diesen Fällen kann ein spezieller Wärmetauscher angeordnet sein, durch den ein Wärmeaustausch zwischen internen und externen Kühlmitteln des Aufzugantrieb stattfindet.

Bei kleineren, kompakteren Aufzugsantrieben kann der Rahmen aus einem Stahlzylinder bestehen, der an seiner Aussenseite mehrere Kühlrippen aufweisen kann. In diesem Fall kann eine enge Passung zwischen dem Stator und dem Rahmen dafür sorgen, dass die von dem Aufzugsantrieb erzeugten thermischen Verluste an die Umgebung abgegeben werden können. Die Kühlrippen vergrössern dabei eine Oberfläche für den Wärmeaustausch und verbessern dadurch die Kühlwirkung. Die Wärmeübertragung von dem Rahmen an eine Umgebung des Aufzugsantriebs, insbesondere an die Luft, die den Aufzugsantrieb umgibt, kann entweder mittels einer Zwangsbelüftung, insbesondere unter Verwendung eines oder mehrerer Ventilatoren, die den Luftstrom zu den Kühlrippen leiten, oder durch natürliche Konvektion erfolgen.

Bei kompakteren, insbesondere in Richtung der Drehachse kurzen Aufzugsantrieben können andere, vereinfachte Konstruktionen verwendet werden, insbesondere die so genannten rahmenlosen Konstruktionen, insbesondere rahmenlose Statoren. Diese Konstruktionen erfordern kein spezielles Gehäuse, das den Stator umgibt, wodurch die Gesamtkosten gesenkt werden. Bei Anwendungen, bei denen eine Gesamtlänge des Stators und des Rotors in Richtung der Drehachse begrenzt ist, beispielsweise auf weniger als 1 m, kann ein derartiger rahmenloser Stator mit mehreren Schrauben an einem Sockel befestigt werden, wobei die Schrauben in Stützstrukturen an einer Aussenfläche des rahmenlosen Stators eingesetzt werden können. Häufig ist auch ein zweiter Sockel angeordnet, auf dem Lager, die den Rotor drehbar tragen, angeordnet sind. Jedoch kann bei diesen rahmenlosen Statoren die Kühlung unzureichend sein, da das Gehäuse mit den entsprechenden Kühlvorrichtungen fehlt.

Im Bereich der Aufzugsanlagen ist ein relativ hohes Antriebsdrehmomente in einem breiten Drehzahlbereich erforderlichdaher werden bei rahmenlosen Statoren regelmässig Hilfslüfter benötigt, um die notwendige Kühlung des Aufzugsantriebs bei jeder Betriebsgeschwindigkeit sicherzustellen. Diese Hilfslüfter werden mittels entsprechender Steuerschaltkreise und eigener kleiner Elektromotoren betrieben, die von externen Energiequellen gespeist werden.

Sowohl das Gehäuse als auch die Hilfslüfter tragen zu einer komplexen Struktur klassischer Aufzugsantriebe bei. Dies kann zu relativ hohen Herstellungskosten und relativ zeit- und/oder kostenintensiven Wartungsarbeiten für den Aufzugsantrieb führen, insbesondere verglichen mit weniger komplexen Aufzugsantrieben ohne Gehäuse bzw. ohne Hilfslüfter. Im Falle der Verwendung der Hilfslüfter kann der Energieverbrauch des Aufzugsantriebs relativ hoch sein, was sich negativ auf eine Nachhaltigkeit des Aufzugsantriebs auswirken und zu relativ hohen Betriebskosten führen kann, verglichen mit dem Aufzugsantrieb ohne Hilfslüfter.

Somit kann es einen Bedarf für eine Aufzugsanlage bestehen. Insbesondere kann es ein Bedarf für eine Aufzugsanlage mit einem Aufzugsantrieb mit einem rahmenlosen Stator (engl.: «frameless stator») geben, die einfach ausgebildet ist, die kostengünstig herstellbar und/oder betreibbar ist, und/oder die auf einfache Weise gewartet werden kann. Ferner kann es einen Bedarf für ein Verfahren zum Herstellen einer solchen Aufzugsanlage geben, das einfach und/oder kostengünstig durchführbar ist.

Einem solchen Bedarf kann durch den Gegenstand eines der unabhängigen Ansprüche entsprochen werden. Vorteilhafte Ausführungsformen sind in den abhängigen Ansprüchen und in der nachfolgenden Beschreibung sowie den begleitenden Figuren definiert.

Ein erster Aspekt der Erfindung betrifft eine Aufzugsanlage. Die Erfindung umfasst eine Aufzugsanlage aufweisend:
- einen Aufzugsschacht;
- einen Fahrkorb, der in dem Aufzugschacht angeordnet ist;
- mindestens ein Gegengewicht, das in dem Aufzugschacht angeordnet ist und über mindestens ein Tragmittel mit dem Fahrkorb gekoppelt ist;
   mindestens ein Aufzugsantriebe;
   wobei das mindestens eine Tragmittel über den Aufzugsantriebs so verläuft, dass das Tragmittel mittels des Aufzugantriebs bewegbar ist, so dass der Fahrkorb und das mindest ein Gegengewicht mittels Betreibens des Aufzugantriebs vertikal verlagerbar ist; und
- eine Bremse mittels der der Fahrkorb und/oder das Gegengewicht abbremsbar und/oder feststellbar ist.

Gemäss einer Ausführungsform weist der Aufzugsantrieb einen gehäuselosen Stator auf. Der gehäuselose Stator weist auf: einen Statorkern, der eine Statorausnehmung zum Aufnehmen eines Rotors des Aufzugsantriebs aufweist, und eine oder mehrere Kühlrippen, die an einer Aussenfläche des Statorkerns angeordnet sind.

Der gehäuselose Stator kann auch als «frameless stator» bezeichnet werden. Dass der Stator gehäuselos ist, bedeutet, dass der Stator nicht in einem Statorgehäuse oder Gehäuse des Aufzugantriebs angeordnet ist, das wiederum an einem entsprechenden Sockel angeordnet ist, sondern dass der Stator direkt an dem entsprechenden Sockel angeordnet ist und/oder dass der Aufzugsantrieb kein Gehäuse, insbesondere kein Statorgehäuse, aufweist.

Der Statorkern kann beispielsweise mehrere Metallschichten, insbesondere Metallbleche, beispielsweise Eisenbleche, aufweisen oder aus diesen bestehen. Die Metallschichten können jeweils eine Dicke aufweisen in einem Bereich beispielsweise von 0,1 mm bis 1 cm, beispielsweise von 0,3 mm bis 0,65 mm. Die Metallschichten können durch dielektrische Schichten voneinander abgetrennt sein, um durch den magnetischen Wechselstrom induzierte Wirbelstromverluste gering zu halten. Im Falle der Metallbleche kann dies durch einen beidseitig auf die Metallbleche aufgebrachten Isolierlack realisiert sein. Die Metallschichten weisen jeweils eine Schichtausnehmung der entsprechenden Metallschicht auf, wobei die Schichtausnehmungen gemeinsam eine Statorausnehmung zum Aufnehmen des Rotors bilden. An einer Wandung der gemeinsam gebildeten Ausnehmung können mehrere Wicklungsaufnahmen, beispielsweise in Form von Schlitzen, zum Aufnehmen einer oder mehrerer Statorwicklungen ausgebildet sein. In diesem Zusammenhang kann der Aufzugsantrieb, insbesondere der Stator, die Statorwicklung(en) aufweisen. Die Statorwicklungen können auch als Spulen bezeichnet werden, und/oder Kupfer aufweisen, insbesondere aus isolierten Kupferdrähten gebildet sein.

Vom Statorkern entfernte Stirnflächen der Kühlrippen können in radialer Richtung beispielsweise jeweils mindestens 10 mm von dem Statorkern entfernt sein. Anschaulich gesprochen können die Kühlrippen jeweils eine Höhe von mindestens 10 mm aufweisen. Beispielswiese können die entfernten Stirnflächen der Kühlrippen jeweils zwischen 10 mm und 100 mm, beispielswiese zwischen 15 mm und 70 mm, beispielsweise zwischen 20 mm und 50 mm vom Rest des Statorkerns entfernt sein. Dies trägt dazu bei, dass eine ausreichende Kühlung mittels der Kühlrippen gewährleistet ist.

Der Aufzugsantrieb kann ein Elektromotor oder ein Generator sein, oder kann sowohl im Motorbetrieb als auch im Generatorbetrieb betrieben werden. Der Aufzugsantrieb kann eine Drehwelle, beispielsweise eine Motorwelle oder eine Generatorwelle, aufweisen, die sich um die Drehachse dreht. Der Rotor kann drehfest mit der Drehwelle verbunden sein. Die Drehwelle, der Rotor und/oder der Stator können konzentrisch zu der Drehachse angeordnet sein. Ferner kann der Rotor eine oder mehrere Wicklungen, beispielsweise Kupferwicklungen, aufweisen, insbesondere eine oder mehrere Rotorwicklung(en). Diese Wicklungen können in entsprechenden Wicklungsaufnahmen des Rotors angeordnet und/oder befestigt sein.

Ein grosser Teil von energetischen Verlusten des Aufzugsantriebs liegt in Form von thermischen Verlusten, insbesondere Wärme, vor. Diese thermischen Verluste entstehen zu einem grossen Teil in dem Stator, insbesondere in dem durch die Metallschichten gebildeten Statorkern und in den in den Wicklungsaufnahmen befestigten Statorwicklungen. Der Stator mit den Kühlrippen bewirkt, dass die Wärme genau dort abgeführt wird, wo sie entsteht, wodurch die Kühlung sehr effizient wird. Diese Art der Kühlung ist zudem weitgehend unabhängig von einer aktuellen Drehzahl des Aufzugsantriebs. Daher ist auch bei niedrigen Drehzahlen oder im Stillstand eine ausreichende Kühlung des Aufzugsantriebs gewährleistet. Eine Ausrichtung der Kühlrippen kann an eine ansonsten in dem Aufzugsantrieb und/oder der Umgebung des Aufzugsantriebs auftretende Konvektion angepasst sein, um eine besonders gute Umströmung der Kühlrippen durch Luft und damit eine besonders effiziente Kühlung des Stators und damit des Aufzugsantriebs zu erzeugen.

Bei dem Aufzugsantrieb kann aufgrund des Stators mit den Kühlrippen auf die Verwendung von Hilfslüftern verzichtet werden. Auf diese Weise können die Konstruktion des Aufzugantriebs vereinfacht und somit die Gesamtkosten verringert werden, verglichen mit einem Aufzugsantrieb mit Hilfslüftern. Dadurch kann der Energieverbrauch über die gesamte Lebensdauer des Aufzugsantriebs gering gehalten werden, was die Nachhaltigkeit des Aufzugsantriebs insgesamt fördert. Ausserdem ist eine Komplexität des Aufzugsantriebs mit dem rahmenlosen Stator, der die Kühlrippen aufweist, relativ gering verglichen mit einem Aufzugsantrieb mit Hilfslüftern und/oder mit einem Gehäuse, insbesondere mit einem Statorgehäuse. Aufgrund dieser relativ geringen Komplexität kann eine Zuverlässigkeit des Aufzugsantriebs hoch sein, wodurch eine Anzahl von Betriebsausfällen des Aufzugsantriebs gering sein kann.

Bei Aufzugsantrieben mit horizontaler Drehachse erfordert die Verwendung eines rahmenlosen Stators, die das Fehlen des Gehäuses impliziert, in den meisten Fällen eine begrenzte axiale Länge für den Statorkern, beispielsweise einen Eisenkern, des Stators, so dass der Stator nur auf einer Seite an einer vertikalen Tragstruktur, beispielsweise einem Sockel, aufgehängt werden kann, ohne dass sich dies nachteilig auf eine mechanische Gesamtstabilität, die induzierten Schwingungen und/oder einen im Betrieb des Aufzugsantriebs erzeugten Lärm auswirkt. Im Allgemeinen ist dies erfüllt, wenn eine Länge des Stators auf 1 m oder weniger begrenzt ist. Die vorliegende Erfindung kann jedoch auch für längere Statoren in Betracht gezogen werden, auch wenn diese eine komplexere mechanische Struktur zum Halten des Statorkerns erfordern, beispielsweise zwei Sockel, an denen der Statorkern auf beiden axialen Seiten des Stators befestigt ist.

Diese Bauformen können beispielsweise für verschiedene Personentransportanlagen verwendet werden, beispielsweise für Aufzüge, Rolltreppen oder Fahrsteige. Der Aufzugsantrieb mit dem rahmenlosen Stator mit den Kühlrippen kann jedoch auch für Anwendungen verwendet werden, bei denen die Drehachse des Aufzugsantriebs vertikal ausgerichtet ist.

Gemäss einer Ausführungsform sind die Kühlrippen unmittelbar an dem Statorkern angeordnet. Dies trägt zu einer besonders guten und effektiven thermischen Kopplung des Statorkerns und der Kühlrippen, und damit zu einer besonders effizienten Kühlung des Stators und damit des Aufzugsantriebs bei. Dass die Kühlrippen «unmittelbar», in anderen Worten «direkt», an dem Statorkern angeordnet sind, bedeutet beispielsweise, dass sich kein anderer Körper zwischen den Kühlrippen und dem Statorkern befindet und/oder dass die Kühlrippen einstückig mit dem Statorkern oder zumindest einstückig mit einem oder mehreren Teilen des Statorkerns ausgebildet sind.

Gemäss einer Ausführungsform ist die Statorausnehmung rotationssymmetrisch zu der Drehachse des Aufzugsantriebs und die Kühlrippen sind so ausgebildet und/oder angeordnet, dass sie sich senkrecht zu der Drehachse erstrecken. Die Kühlrippen können sich beispielsweise in Umfangsrichtung des Stators erstrecken. Alternativ dazu können sich die Kühlrippen in axialer Richtung oder in einer Richtung zwischen der Umfangsrichtung und der axialen Richtung erstrecken, abhängig davon bei welcher Ausführungsform eine stärkere Umströmung der Kühlrippen durch die Luft in der Umgebung des Aufzugsantriebs gegeben ist. Ferner können die Kühlrippen parallel zueinander angeordnet sein.

Gemäss einer Ausführungsform sind der Statorkern oder zumindest Teile des Statorkerns und die Kühlrippen einstückig ausgebildet. In anderen Worten können der Statorkern oder zumindest Teile des Statorkerns und die Kühlrippen aus einem Stück gebildet sein. Dies trägt zu einer besonders guten und effektiven thermischen Kopplung des Statorkerns zu den Kühlrippen und damit zu einer besonders effizienten Kühlung des Stators und damit des Aufzugsantriebs bei.

Gemäss einer Ausführungsform weist der Stator mehrere Metallschichten auf, die gemeinsam den Statorkern und die Kühlrippen bilden, die Metallschichten weisen jeweils eine Schichtausnehmung auf, die Metallschichten sind in Richtung der Drehachse alternierend so hintereinander angeordnet, dass die Schichtausnehmung zueinander deckungsgleich sind und gemeinsam die Statorausnehmung bilden, zumindest jede zweite der Metallschichten weist zumindest bereichsweise einen grösseren Aussendurchmesser als eine entsprechende benachbarte der Metallschichten auf, und die Bereiche, in denen die Metallschichten den grösseren Aussendurchmesser als die entsprechenden benachbarten Metallschichten aufweisen, bilden die Kühlrippen. Dies ermöglicht auf einfache Weise, zumindest Teile des Statorkerns, insbesondere die zweiten Metallschichten, einstückig mit den Kühlrippen auszubilden. Dies trägt zu einer besonders effizienten Wärmeabfuhr aus dem Statorkern hin zu den Kühlrippen bei. Die Metallschichten sind Teile des Statorkerns. Zumindest jede zweite der Metallschichten bildet die Kühlrippen und ist somit einstückig mit diesen ausgebildet. Somit sind bei diesem Ausführungsbeispiel die Kühlrippen einstückig mit dem Statorkern, insbesondere einstückig mit Teilen des Statorkerns, ausgebildet.

Optional können die Metallschichten jeweils mehrere durchgehende Befestigungsausnehmungen aufweisen, die so ausgebildet und angeordnet sind, dass sie bei den aneinander angeordneten Metallschichten deckungsgleich hintereinander angeordnet sind. Gegebenenfalls kann durch die Befestigungsausnehmungen je ein Befestigungsmittel, beispielsweise eine Schraube oder ein Stift, geführt werden, beispielsweise um den Stator an dem Sockel zu befestigen. In den Bereichen, in denen die Befestigungsausnehmungen ausgebildet sind, können die ersten und zweiten Metallschichten den gleichen Aussendurchmesser haben. Die Bereiche, in denen die zweiten Metallschichten den grösseren Aussendurchmesser als die ersten Metallschichten aufweisen und die die Kühlrippen bilden, können dann in Umfangsrichtung zwischen den Befestigungsausnehmungen angeordnet sein.

Gemäss einer Ausführungsform sind die Metallschichten jeweils unmittelbar aneinander angeordnet. In anderen Worten kann es sein, dass sich zwischen den Metallschichten keine anderen Komponenten des Aufzugsantriebs befinden, insbesondere in axialer Richtung der Drehachse. Dies kann zu einer besonders guten Kopplung zwischen den Metallschichten beitragen. Alternativ dazu können die im Vorhergehenden erwähnten dielektrischen Schichten, insbesondere der Isolierlack, zwischen den Metallschichten angeordnet sein.

Gemäss einer Ausführungsform weisen die Metallschichten jeweils mehrere Metallsegmente auf oder sind aus diesen gebildet. Somit können die Metallschichten jeweils aus mehreren Metallsegmenten zusammengesetzt sein. Dies kann dazu beitragen, beim Herstellen, insbesondere beim Ausschneiden, Ausstanzen oder Aussägen, der Metallschichten besonders wenig Verschnitt, in anderen Worten Schnittabfälle, zu erzeugen. Dies kann dazu beitragen, Herstellungskosten zum Herstellen der Metallschichten und damit des Stators und damit des Aufzugsantriebs besonders gering zu halten.

Gemäss einer Ausführungsform sind die Metallsegmente einer der Metallschichten in Umfangsrichtung so zu den Metallsegmenten einer benachbarten der entsprechenden Metallschichten versetzt angeordnet, dass Schnittstellen zwischen den Metallsegmenten der einen der Metallschichten zu Schnittstellen zwischen den Metallsegmenten der entsprechenden benachbarten Metallschicht versetzt sind. In anderen Worten können die Metallsegmente so angeordnet sein, dass die Schnittstellen zwischen den Metallsegmenten einer der Metallschichten nicht überlappend zu den Schnittstellen zwischen den Metallsegmenten der entsprechenden benachbarten Metallschichten angeordnet sind. Dies kann dazu beitragen, dass der final zusammengesetzte Stator bezüglich seines Verhaltens, seiner Funktion und/oder seinen Eigenschaften, möglichst nah an einem Stator ist, dessen Statorkern oder dessen Metallschichten aus einem Stück gebildet sind und keine mehreren Metallschichten bzw. mehreren Metallsegmente aufweisen.

Gemäss einer Ausführungsform weisen die Metallschichten erste Metallschichten und zweite Metallschichten auf, die alternierend angeordnet sind, die zweiten Metallschichten weisen zumindest bereichsweise einen grösseren Aussendurchmesser als die ersten Metallschichten auf, und die Bereiche, in denen die zweiten Metallschichten den grösseren Aussendurchmesser als die ersten Metallschichten aufweisen, bilden die Kühlrippen. Somit kann es mindestens zwei verschiedene Arten von Metallschichten geben, wobei eine Art dieser Metallschichten die zweiten Metallschichten sind und wobei die zweiten Metallschichten die Kühlrippen bilden, insbesondere in den Bereichen, in denen die zweiten Metallschichten den grösseren Aussendurchmesser als die ersten Metallschichten aufweisen. Die zweiten Metallschichten sind Teile des Statorkerns. Die zweiten Metallschichten bilden die Kühlrippen und sind somit einstückig mit diesen ausgebildet. Somit sind bei diesem Ausführungsbeispiel die Kühlrippen einstückig mit dem Statorkern, insbesondere einstückig mit Teilen des Statorkerns, ausgebildet.

Gemäss einer Ausführungsform sind die Metallschichten identisch ausgebildet und weisen jeweils Bereiche mit einem ersten Aussendurchmesser und Bereiche mit einem zweiten Aussendurchmesser auf, wobei der zweite Aussendurchmesser grösser als der erste Aussendurchmesser ist, und die Metallschichten sind so aneinander angeordnet, dass die Bereiche mit den ersten Aussendurchmessern einer der Metallschichten in Richtung der Drehachse neben Bereichen mit den zweiten Aussendurchmessern einer entsprechenden benachbarten der Metallschichten angeordnet sind, wobei durch die Bereiche mit den zweiten Aussendurchmessern die Kühlrippen gebildet sind. Somit kann der Statorkern aus mehreren gleichartigen Metallschichten gebildet sein, die lediglich in einzelnen Aussenbereichen die erweiterten Aussendurchmesser aufweisen, wobei dann diese gleichartigen Metallschichten derart versetzt zueinander angeordnet sind, dass die Bereiche mit erweiterten Aussendurchmessern einer der Metallschichten jeweils in axialer Richtung neben Bereichen mit nicht-erweiterten Aussendurchmessern der entsprechenden benachbarten Metallschichten angeordnet sind. Auch bei dieser Ausführungsform bilden die Bereiche, in denen die Metallschichten den grösseren Aussendurchmesser aufweisen, die Kühlrippen. Des Weiteren sind auch bei dieser Ausführungsform die Kühlrippen einstückig mit Teilen des Statorkerns, insbesondere mit den Metallschichten, ausgebildet.

Gemäss einer Ausführungsform weist der Rotor mehrere Flügel auf, die zwischen der Drehachse und einem Aussenumfang des Rotors angeordnet sind und die dazu ausgebildet sind, Luft hin zu dem Stator zu bewegen. Der Rotor mit den Flügeln kann insbesondere so konfiguriert sein, dass er wie ein Lüfter wirkt, der bei der Drehung des Rotors die Luft nach aussen hin zu dem Stator bewegt. Diese Luft kann an den Kühlrippen vorbeiziehen und an diesen Wärme aufnehmen. Dies kann dazu beitragen, eine Kühleffizienz der Kühlrippen zu erhöhen. Eine Form der Flügel und die Ausrichtung der Kühlrippen können aufeinander abgestimmt sein, so dass mittels der Flügel eine optimale Umströmung der Kühlrippen mit Luft erzielt werden kann.

Ein zweiter Aspekt der Erfindung betrifft ein Verfahren zum Herstellen einer Aufzugsanlage umfassend einen Aufzugsantrieb mit einem gehäuselosen Stators für, das Verfahren aufweisend: Bereitstellen mehrerer der Metallschichten, die jeweils eine der Schichtausnehmungen aufweisen; und Anordnen der Metallschichten in Richtung der Drehachse so hintereinander, dass die Schichtausnehmungen zueinander deckungsgleich sind und gemeinsam die Statorausnehmung zum Aufnehmen des Rotors des Aufzugsantriebs bilden, wobei zumindest jede zweite der Metallschichten zumindest bereichsweise den grösseren Aussendurchmesser als die entsprechende benachbarte der Metallschichten aufweist, wobei die Bereiche, in denen die Metallschichten den grösseren Aussendurchmesser als die entsprechenden benachbarten Metallschichten aufweisen, die Kühlrippen des Stators bilden und die aneinander angeordneten Metallschichten gemeinsam den Statorkern des Stators bilden.

Merkmale der Aufzugsanlage gemäss einer Ausführungsform des ersten Aspekts der Erfindung können auch Merkmale des Verfahrens gemäss einer Ausführungsform des zweiten Aspekts der Erfindung sein und umgekehrt.

Gemäss einer Ausführungsform weisen die Metallschichten erste Metallschichten und zweite Metallschichten auf, die beim hintereinander Anordnen der Metallschichten alternierend angeordnet werden, die zweiten Metallschichten weisen zumindest bereichsweise einen grösseren Aussendurchmesser als die ersten Metallschichten auf und die Bereiche, in denen die zweiten Metallschichten den grösseren Aussendurchmesser als die ersten Metallschichten aufweisen, bilden die Kühlrippen.

Gemäss einer Ausführungsform sind die Metallschichten identisch ausgebildet und weisen jeweils Bereiche mit einem ersten Aussendurchmesser und Bereiche mit einem zweiten Aussendurchmesser auf, wobei der zweite Aussendurchmesser grösser ist als der erste Aussendurchmesser, und die Metallschichten werden beim hintereinander Anordnen der Metallschichten so angeordnet, dass die Bereiche mit den ersten Aussendurchmessern einer der Metallschichten in Richtung der Drehachse neben Bereichen mit den zweiten Aussendurchmessern einer entsprechenden benachbarten der Metallschichten angeordnet sind, wobei durch die Bereiche mit den zweiten Aussendurchmessern die Kühlrippen gebildet sind.

Der Aufzugsantrieb eignet sich zur Verwendung in einer Personentransportanlage, insbesondere um eine Personenbeförderungseinrichtung der Personentransportanlage zu bewegen. Die Personentransportanlage kann beispielsweise eine Aufzugsanlage, eine Rolltreppe oder ein Fahrsteig sein. Dementsprechende kann die Personenbeförderungseinrichtung einen Fahrkorb der Aufzugsanlage, Treppenstufen der Rolltreppe bzw. bewegbare Metallsegmente des Fahrsteigs aufweisen. Beispielsweise im Falle der Aufzugsanlage, kann der Fahrkorb vertikal verlagerbar in einem Aufzugsschacht angeordnet sein und der Aufzugsantrieb kann so angeordnet und ausgebildet sein, dass der Fahrkorb mittels des Aufzugsantriebs in dem Aufzugsschacht vertikal verlagerbar ist, wobei der Aufzugsantrieb über mindestens ein Tragmittel mit dem Fahrkorb mechanisch gekoppelt ist.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine schematische seitliche Schnittdarstellung einer Aufzugsanlage gemäss einem Ausführungsbeispiel der Erfindung.
Fig. 2 zeigt eine schematische seitliche Schnittdarstellung eines Aufzugsantriebs gemäss einem Ausführungsbeispiel der Erfindung.
Fig. 3 zeigt eine perspektivische Ansicht eines Stators für eines Aufzugsantriebs gemäss einem Ausführungsbeispiel der Erfindung.
Fig. 4 zeigt eine perspektivische Ansicht eines Stators für einen Aufzugsantrieb gemäss einem Ausführungsbeispiel der Erfindung.
Fig. 5 zeigt eine perspektivische Detailansicht eines Stators gemäss einem Ausführungsbeispiel der Erfindung.
Fig. 6 zeigt eine perspektivische Ansicht eines ersten Metallsegments einer ersten Metallschicht des Stators gemäss Figur 4.
Fig. 7 zeigt eine perspektivische Ansicht eines Ausführungsbeispiels eines zweiten Metallsegments einer zweiten Metallschicht des Stators gemäss Figur 4.
Fig. 8 zeigt eine schematische seitliche Schnittdarstellung eines Aufzugsantriebs gemäss einem Ausführungsbeispiel der Erfindung.
Fig. 9 zeigt ein Ablaufdiagram eines Ausführungsbeispiels eines Verfahrens zum Herstellen eines Stators gemäss einem Ausführungsbeispiel der Erfindung.
Fig. 10 zeigt ein Ablaufdiagram eines Ausführungsbeispiels eines Verfahrens zum Herstellen eines Stators gemäss einem Ausführungsbeispiel der Erfindung.

Die Figuren sind lediglich schematisch und nicht massstabsgetreu. Gleiche Bezugszeichen bezeichnen in den verschiedenen Figuren gleiche oder gleichwirkende Merkmale.

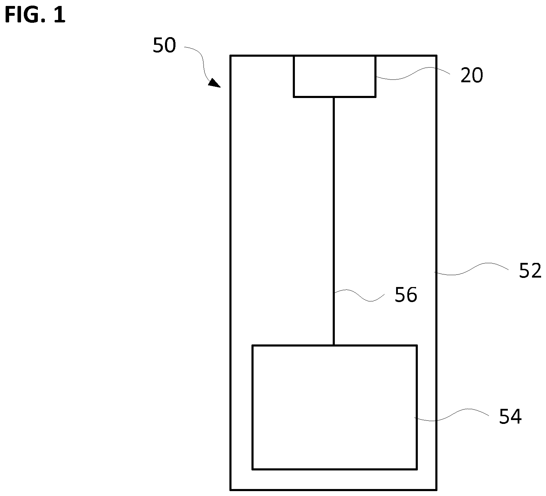

Fig. 1 zeigt eine schematische seitliche Schnittdarstellung einer Personentransportanlage, beispielsweise einer Aufzugsanlage 50, gemäss einem Ausführungsbeispiel der Erfindung. Die Aufzugsanlage 50 weist einen Fahrkorb 54, der vertikal verlagerbar in einem Aufzugsschacht 52 angeordnet ist, auf. Die Aufzugsanlage 50 weist einen der im Vorhergehenden beschriebenen Aufzugsantrieb 20 auf. Der Aufzugsantrieb 20 ist so angeordnet und ausgebildet ist, dass der Fahrkorb 54 mittels des Aufzugsantriebs 20 in dem Aufzugsschacht 52 vertikal verlagerbar ist, wobei der Aufzugsantrieb 20 über mindestens ein Tragmittel 56, beispielsweise ein Stahlseil, mit dem Fahrkorb 54 mechanisch gekoppelt ist.

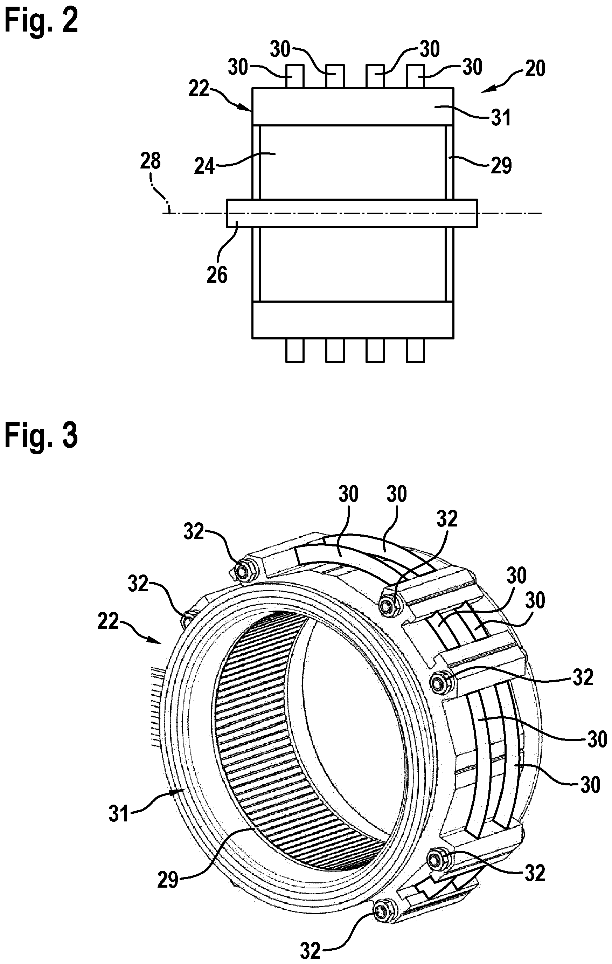

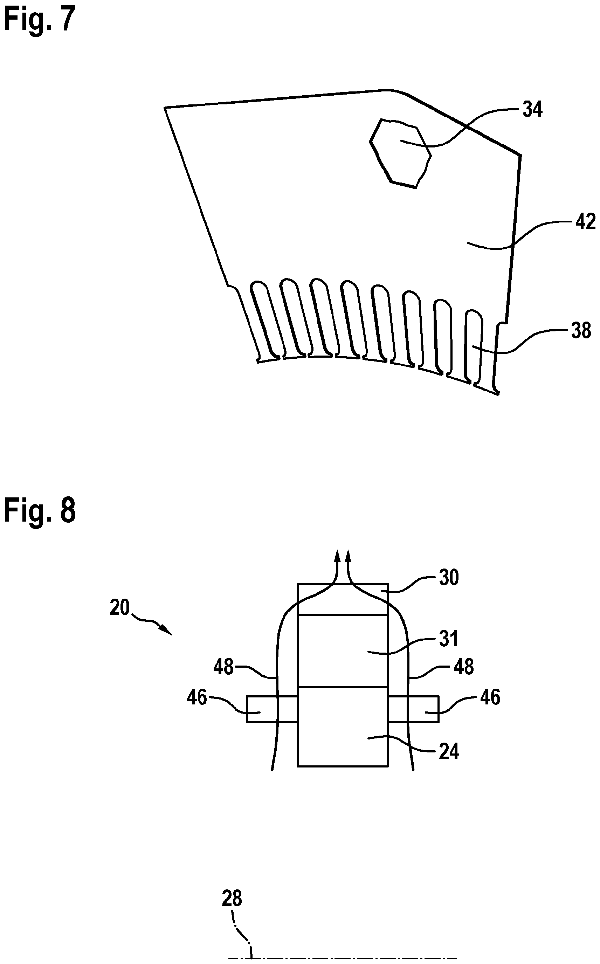

Fig. 2 zeigt eine schematische seitliche Schnittdarstellung eines Aufzugsantriebs 20, gemäss einem Ausführungsbeispiel der Erfindung. Der Aufzugsantrieb 20 eignet sich beispielsweise zur Verwendung in einer Personentransportanlage, wie beispielsweise einer Aufzugsanlage (siehe Figur 8), einer Rolltreppe oder einem Fahrsteig. Der Aufzugsantrieb 20 weist einen Rotor 24, der um eine Drehachse 28 des Aufzugsantriebs 20 drehbar gelagert ist, und einen gehäuselosen Stator 22 auf. Der gehäuselose Stator 22 weist einen Statorkern 31, in dem der Rotor 24 drehbar angeordnet ist, und eine oder mehrere Kühlrippen 30 auf, die an einer Aussenfläche des Statorkerns 31 angeordnet sind. Der Stator 22, insbesondere der Statorkern 31 weist eine Statorausnehmung 29 zum Aufnehmen des Rotors 24 auf.

Der gehäuselose Stator 22 kann auch als «frameless stator» bezeichnet werden. Dass der Stator 22 gehäuselos ist, bedeutet, dass der Stator 22 nicht in einem Statorgehäuse oder Gehäuse des Aufzugsantriebs 20 angeordnet ist, das wiederum an einem entsprechenden Sockel (nicht gezeigt) angeordnet ist, sondern dass der Stator 22 direkt an dem Sockel angeordnet ist und/oder dass der Aufzugsantrieb 20 kein Gehäuse, insbesondere kein Statorgehäuse, aufweist.

Der Aufzugsantrieb 20 kann ein Elektromotor oder ein Generator sein, oder kann sowohl im Motorbetrieb als auch im Generatorbetrieb betrieben werden. Der Aufzugsantrieb 20 kann eine Drehwelle 26, beispielsweise eine Motorwelle oder eine Generatorwelle, aufweisen, die sich um die Drehachse 28 dreht. Der Rotor 24 kann drehfest mit der Drehwelle 26 verbunden sein. Die Drehwelle 26, der Rotor 24 und/oder der Stator 22 können konzentrisch zu der Drehachse 28 angeordnet sein. Ferner können der Rotor 24 und/oder der Stator 22 eine oder mehrere Wicklungen (nicht gezeigt), beispielsweise Kupferwicklungen, aufweisen, insbesondere eine oder mehrere Rotorwicklung(en) bzw. eine oder mehrere Statorwicklung(en).

Die Kühlrippen 30 können unmittelbar an dem Statorkern 31 angeordnet sein. Dass die Kühlrippen 30 «unmittelbar», in anderen Worten «direkt», an dem Statorkern 31 angeordnet sein können, bedeutet beispielsweise, dass es sein kann, dass sich kein anderer Körper zwischen den Kühlrippen 30 und dem Statorkern 31 befindet und/oder dass die Kühlrippen 30 einstückig mit dem Statorkern 31 oder zumindest einstückig mit einem oder mehreren Teilen des Statorkerns 31 ausgebildet sind, wie weiter unten näher erläutert.

Die Kühlrippen 30 können so ausgebildet und/oder angeordnet sein, dass sie sich senkrecht zu der Drehachse 28 erstrecken. Die Kühlrippen 30 können sich beispielsweise in Umfangsrichtung des Stators 31 erstrecken. Alternativ dazu können sich die Kühlrippen in axialer Richtung erstrecken, abhängig davon bei welcher Ausführungsform eine stärkere Umströmung der Kühlrippen 30 durch die Luft in der Umgebung des Aufzugsantriebs 20 gegeben ist. Ferner können die Kühlrippen 30 parallel zueinander angeordnet sein. Sowohl die Ausrichtung der Kühlrippen 30 als auch ein Abstand zwischen den Kühlrippen 30 können so gewählt werden, dass eine natürliche Konvektion ausgenutzt wird, um eine optimale Umströmung der Kühlrippen 30 mit Luft zu gewährleisten.

Vom Statorkern 31 entfernte Stirnflächen der Kühlrippen 30 können in radialer Richtung, also in Richtung senkrecht zur Drehachse 28, jeweils mindestens 10 mm von dem Statorkern 31 entfernt sein. Anschaulich gesprochen können die Kühlrippen 30 jeweils eine Höhe von mindestens 10 mm aufweisen. Beispielswiese können die entfernten Stirnflächen der Kühlrippen 30 jeweils zwischen 10 mm und 100 mm, beispielswiese zwischen 15 mm und 70 mm, beispielsweise zwischen 20 mm und 50 mm von dem Statorkern 31 entfernt sein. In diesem Zusammenhang kann ein Aussendurchmesser des Stators 22 in einem Bereich liegen beispielsweise von 100 mm bis 500 mm, beispielsweise bei ungefähr 200 mm.

Fig. 3 zeigt eine perspektivische Ansicht eines Stators 22 für einen Aufzugsantrieb 20, gemäss einem Ausführungsbeispiel der Erfindung, beispielsweise für den mit Bezug zu Figur 1 erläuterten Aufzugsantrieb 20. Der Stator 22 weist an seiner Aussenfläche die Kühlrippen 30 auf. Bei diesem Ausführungsbeispiel kann der Statorkern 31 einstückig ausgebildet sein. In anderen Worten kann dieser Statorkern 31 massiv ausgebildet sein. Alternativ dazu kann der Statorkern 31 aus ineinander angeordneten Metallringen gebildet sein, wobei der innerste Metallring die Statorausnehmung 29 bildet und der äusserste Metallring mit den Kühlrippen 30 gekoppelt ist.

Die Kühlrippen 30 können wie mit Bezug zu Figur 1 erläutert ausgebildet sein. Insbesondere können die Kühlrippen 30 einstückig mit dem Statorkern 31 ausgebildet sein und/oder sich in Umfangsrichtung des Stators 22 erstrecken. Beispielsweise können der Statorkern 31 oder gegebenenfalls der äusserste Metallring des Statorkerns 31 so gegossen werden, dass der entsprechende Gusskörper auch die Kühlrippen 30 aufweist. In anderen Worten können der Statorkern 31 und die Kühlrippen 30 aus einem Stück gebildet sein. Alternativ dazu können die Kühlrippen 30 direkt an dem Statorkern 31 befestigt sein.

In Umfangsrichtung können zwischen den Kühlrippen 30 mehrere Befestigungsausnehmungen ausgebildet sein, durch die Befestigungsmittel 32 zum Befestigen des Stators 30 an dem Sockel geführt sein können.

An einer Wandung der Statorausnehmung 29 können mehrere Wicklungsaufnahmen 38, beispielsweise in Form von Schlitzen, zum Aufnehmen einer oder mehrerer Statorwicklungen (nicht gezeigt) ausgebildet sein. In diesem Zusammenhang kann der Aufzugsantrieb 20, insbesondere der Stator 22, die Statorwicklung(en) aufweisen. Die Statorwicklungen können auch als Spulen bezeichnet werden, und/oder Kupfer aufweisen, insbesondere aus isolierten Kupferdrähten gebildet sein.

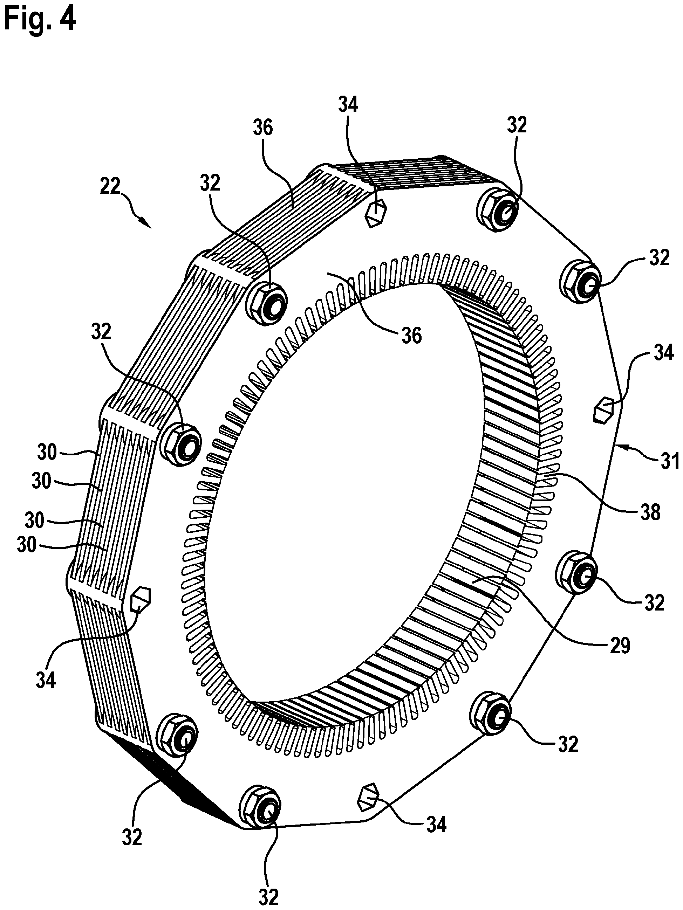

Fig. 4 zeigt eine perspektivische Ansicht eines Stators 22 für einen Aufzugsantrieb 20, gemäss einem Ausführungsbeispiel der Erfindung, beispielsweise für dne mit Bezug zu Figur 1 erläuterten Aufzugsantrieb 20.

Der Statorkern 31 kann beispielsweise aus mehreren Metallschichten 36, insbesondere Metallblechen, beispielsweise Eisenblechen gebildet sein. Die Metallschichten 36 können jeweils eine Dicke aufweisen in einem Bereich beispielsweise von 0,1 mm bis 1 cm, beispielsweise von 0,3 mm bis 0,65 mm. Die Metallschichten 36 können durch dielektrische Schichten (nicht gezeigt) voneinander abgetrennt sein, um durch den magnetischen Wechselstrom induzierte Wirbelstromverluste gering zu halten. Im Falle der Metallbleche kann dies durch einen beidseitig auf die Metallbleche aufgebrachten Isolierlack realisiert sein. Alternativ dazu können die Metallschichten 36 direkt aneinander angeordnet sein. Die Metallschichten 36 weisen jeweils eine Schichtausnehmung der entsprechenden Metallschicht 36 auf, wobei die Schichtausnehmungen gemeinsam die Statorausnehmung 29 bilden.

Die Metallschichten 36 können jeweils mehrere durchgehende Befestigungsausnehmungen 34 aufweisen, die so ausgebildet und angeordnet sind, dass sie bei den aneinander angeordneten Metallschichten 36 deckungsgleich hintereinander angeordnet sind. Gegebenenfalls kann durch die Befestigungsausnehmungen 34 je eines der Befestigungsmittel 34, beispielsweise eine Schraube oder ein Stift, geführt werden, beispielsweise um den Stator 22 an dem Sockel zu befestigen.

Die Metallschichten 36 können gleichartig ausgebildet sein. Die gleichartigen Metallschichten 36 können jeweils in einzelnen Aussenbereichen einen erweiterten Aussendurchmesser aufweisen. Diese gleichartigen Metallschichten 36 können derart versetzt zueinander angeordnet sein, dass die Bereiche mit erweiterten Aussendurchmessern einer der gleichartigen Metallschichten 36 jeweils in axialer Richtung neben Bereichen mit nicht-erweiterten Aussendurchmessern der entsprechenden benachbarten gleichartigen Metallschicht 36 angeordnet sind. In den Bereichen, in denen die Befestigungsausnehmungen 34 ausgebildet sind, können Metallschichten 36 den gleichen Aussendurchmesser haben. In Umfangsrichtung zwischen diesen Bereichen können die Metallschichten 36 den grösseren Aussendurchmesser aufweisen und dort die Kühlrippen 30 bilden. Des Weiteren sind bei dieser Ausführungsform die Kühlrippen 30 einstückig mit Teilen des Statorkerns 31, insbesondere mit den Metallschichten 36, ausgebildet.

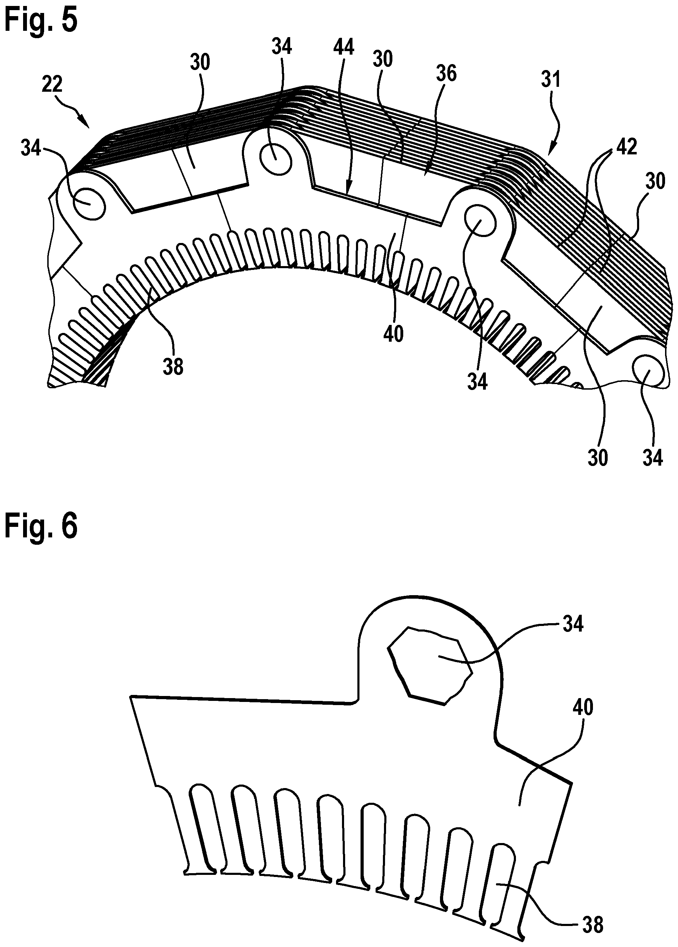

Fig. 5 zeigt eine perspektivische Detailansicht eines Stators 22, gemäss einem Ausführungsbeispiel der Erfindung. Der Stator 22 weist die Metallschichten, die im Folgenden als zweite Metallschichten 36 bezeichnet werden, und erste Metallschichten 44 auf, die gemeinsam den Statorkern 31 und die Kühlrippen 30 bilden. Die ersten Metallschichten 44 können eine erste Schichtausnehmung zum Aufnehmen des Rotors 24 aufweisen. Die zweiten Metallschichten 36 können jeweils eine zweite Schichtausnehmung zum Aufnehmen des Rotors 24 aufweisen. Die Grösse und Form der zweiten Schichtausnehmungen können einer Grösse und Form der ersten Schichtausnehmungen entsprechen.

Die zweiten Metallschichten 36 weisen zumindest bereichsweise einen grösseren Aussendurchmesser als die ersten Metallschichten 44 auf. Die ersten und zweiten Metallschichten 44, 36 können in Richtung der Drehachse 28 so alternierend hintereinander angeordnet sein, dass die Schichtausnehmung zueinander deckungsgleich sind und dass die Bereiche, in denen die zweiten Metallschichten 36 den grösseren Aussendurchmesser als die ersten Metallschichten 44 aufweisen, die Kühlrippen 30 bilden. Die deckungsgleich nebeneinander angeordneten Schichtausnehmungen bilden gemeinsam die Statorausnehmung 29, in der der Rotor 24 drehbar gelagert angeordnet werden kann.

Die zweiten Metallschichten 36 sind Teile des Stators 22. Die zweiten Metallschichten 36 bilden die Kühlrippen 30 und sind somit einstückig mit diesen ausgebildet. Somit sind bei diesem Ausführungsbeispiel die Kühlrippen 30 einstückig mit dem Statorkern 31, insbesondere einstückig mit Teilen des Statorkerns 31, insbesondere den zweiten Metallschichten 36, ausgebildet.

Optional sind die ersten und die zweiten Metallschichten 44, 36 jeweils unmittelbar aneinander angeordnet. In anderen Worten kann es sein, dass sich zwischen den ersten und den zweiten Metallschichten 44, 36 keine anderen Komponenten des Aufzugsantriebs 20 befinden, insbesondere in axialer Richtung der Drehachse 28. Alternativ dazu können die im Vorhergehenden erwähnten dielektrischen Schichten, insbesondere der Isolierlack, zwischen den Metallschichten 44, 36 angeordnet sein.

Optional können die ersten Metallschichten 44 jeweils aus mehreren ersten Metallsegmenten 40 zusammengesetzt sein und/oder die zweiten Metallschichten 36 können jeweils aus mehreren zweiten Metallsegmenten 42 zusammengesetzt sein. Beispielsweise können die ersten Metallsegmente 40 in Umfangsrichtung so zu den zweiten Metallsegmenten 42 versetzt angeordnet sind, dass Schnittstellen zwischen den ersten Metallsegmenten 40 zu Schnittstellen zwischen den zweiten Metallsegmenten 42 versetzt sind. In anderen Worten können die Metallsegmente 40, 42 so angeordnet sein, dass die Schnittstellen zwischen den ersten Metallsegmenten 40 nicht überlappend zu den Schnittstellen zwischen den zweiten Metallsegmenten 42 angeordnet sind.

Fig. 6 zeigt eine perspektivische Ansicht eines Ausführungsbeispiels eines der ersten Metallsegmente 40 einer der ersten Metallschichten 44 des Stators 22 gemäss Figur 4. Insbesondere können die ersten Metallschichten 36 jeweils mehrere dieser ersten Metallsegmente 40 aufweisen oder aus diesen gebildet sein. Die ersten Metallsegmente 40 können die Wicklungsaufnahmen 38 zum Aufnehmen der Statorwicklung aufweisen.

Fig. 7 zeigt eine perspektivische Ansicht eines Ausführungsbeispiels eines der zweiten Metallsegmente 42 einer der zweiten Metallschichten 44 des Stators 22 gemäss Figur 4. Insbesondere können die zweiten Metallschichten 44 jeweils mehrere der zweiten Metallsegmente 42 aufweisen oder aus diesen gebildet sein. Die zweiten Metallsegmente 42 können die Wicklungsaufnahmen 38 zum Aufnehmen der Statorwicklung aufweisen.

Fig. 8 zeigt eine schematische seitliche Schnittdarstellung eines Aufzugsantriebs 20 gemäss einem Ausführungsbeispiel der Erfindung. Der Aufzugsantrieb 20 kann beispielsweise weitgehend zu dem mit Bezug zu Figur 1 erläutertem Aufzugsantrieb 20 korrespondieren und/oder einen der mit Bezug zu den Figuren 2, 3 oder 4 erläuterten Statoren 22 aufweisen. Daher werden im Folgenden lediglich die Merkmale des in Figur 7 gezeigten Aufzugsantrieb 20 erläutert, in denen sich der Aufzugsantrieb 20 von dem mit Bezug zu Figur 1 erläuterten Aufzugsantrieb 20 unterscheidet.

Der Rotor 24 kann mehrere Flügel 46 aufweisen, die zwischen der Drehachse 28 und einem Aussenumfang des Rotors 24 angeordnet sind und die dazu ausgebildet sind, bei einer Drehung des Rotors 24 Luft aus der Umgebung des Aufzugsantriebs 20 hin zu dem Stator 22, insbesondere hin zu den Kühlrippen 30 zu bewegen. Der Rotor 24 mit den Flügeln 46 kann insbesondere so konfiguriert sein, dass er wie ein Lüfter wirkt, der bei der Drehung des Rotors 24 die Luft nach aussen hin zu dem Stator 22 bzw. den Kühlrippen 30 bewegt.

Im Übrigen sind bei diesem Ausführungsbeispiel die Kühlrippen 30 parallel zu der Drehachse 28 ausgebildet. Alternativ dazu können die Kühlrippen 30 wie in Figur 1 gezeigt senkrecht zu der Drehachse 28 und in Umfangsrichtung ausgebildet sein. Ferner können die Kühlrippen 30 auch schräg ausgebildet sein, also von Ihrer Ausrichtung her zwischen der in Figur 1 gezeigten Ausrichtung und der in Figur 7 gezeigten Ausrichtung.

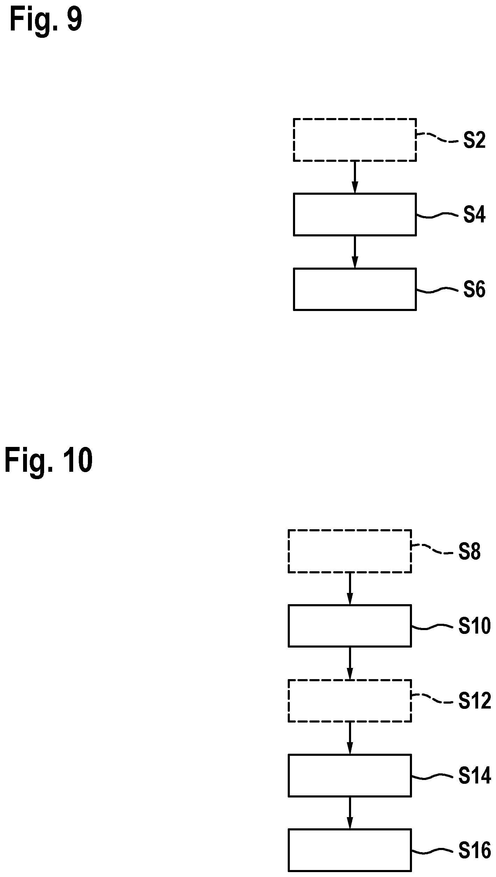

Fig. 9 zeigt ein Ablaufdiagram eines Ausführungsbeispiels eines Verfahrens zum Herstellen eines Stators 22, beispielsweise des Stators 22 gemäss Figur 3.

In einem optionalen Schritt S2, können die gleichartigen Metallschichten 36 bereitgestellt werden, indem entsprechende Metallsegmente ausgebildet und zusammengesetzt werden, die gemeinsam die entsprechende Metallschicht 36 bilden. Die Metallsegmente können beispielsweise aus entsprechenden Metallblechen ausgestanzt, ausgefräst, ausgesägt oder ausgeschnitten werden.

In einem Schritt S4 können die gleichartigen Metallschichten 36 bereitgestellt werden. Die gleichartigen Metallschichten 36 können jeweils Bereiche mit einem ersten Aussendurchmesser und Bereiche mit einem zweiten Aussendurchmesser aufweisen, wobei der zweite Aussendurchmesser grösser ist als der erste Aussendurchmesser. Die gleichartigen Metallschichten 36 können beispielsweise aus entsprechenden Metallblechen ausgestanzt, ausgefräst, ausgesägt oder ausgeschnitten werden. In diesem Fall können die gleichartigen Metallschichten 36 jeweils einstückig ausgebildet sein. Alternativ dazu können die gleichartigen Metallschichten 36 mittels des Schritts S2 bereitgestellt werden. Die gleichartigen Metallschichten 36 können so ausgebildet werden, dass sie jeweils die Schichtausnehmung zum Aufnehmen des Rotors 24 aufweisen.

In einem Schritt S6 können die gleichartigen Metallschichten 36 in Richtung der Drehachse 28 so hintereinander angeordnet werden, dass deren Schichtausnehmungen zueinander deckungsgleich sind und dass die Bereiche mit den ersten Aussendurchmessern einer der gleichartigen Metallschichten 36 in Richtung der Drehachse 28 neben Bereichen mit den zweiten Aussendurchmessern einer entsprechenden benachbarten der gleichartigen Metallschichten 36 angeordnet sind, wobei durch die Bereiche mit den zweiten Aussendurchmessern die Kühlrippen 30 gebildet sind. Die aneinander angeordneten gleichartigen Metallschichten 36 bilden gemeinsam den Statorkern 31 und die Kühlrippen 30 des Stators 22. Die gleichartigen Metallschichten 36 können unmittelbar aneinander angeordnet werden.

Falls die gleichartigen Metallschichten 36 aus den entsprechenden Metallsegmenten zusammengesetzt werden, können die gleichartigen Metallschichten 36 so aneinander angeordnet werden, dass die Metallsegmente in Umfangsrichtung so zu den Metallsegmenten benachbarter Metallschichten 36 versetzt angeordnet sind, dass die Schnittstellen zwischen den Metallsegmenten zu den Schnittstellen zwischen den Metallsegmenten der benachbarten Metallschichten 36 versetzt sind.

Abschliessend können gegebenenfalls die Statorwicklungen an dem Stator 22 befestigt werden, insbesondere in den Wicklungsaufnahmen 38.

Fig. 10 zeigt ein Ablaufdiagram eines Ausführungsbeispiels eines Verfahrens zum Herstellen eines Stators 22, beispielsweise des Stators 22 gemäss Figur 4.

In einem optionalen Schritt S8, können die ersten Metallschichten 44 bereitgestellt werden, indem die mehreren ersten Metallsegmente 40 ausgebildet und zusammengesetzt werden, die gemeinsam die entsprechende erste Metallschicht 44 bilden. Die Metallsegmente 40 können beispielsweise aus entsprechenden Metallblechen ausgestanzt, ausgefräst, ausgesägt oder ausgeschnitten werden. Der Schritt S2 kann insbesondere dann ausgeführt werden, wenn die ersten Metallschichten 44 aus den ersten Metallsegmenten 40 zusammengesetzt werden.

In einem Schritt S10 können mehrere der ersten Metallschichten 44 bereitgestellt werden. Die ersten Metallschichten 44 können beispielsweise aus entsprechenden Metallblechen ausgestanzt, ausgefräst, ausgesägt oder ausgeschnitten werden. In diesem Fall können die ersten Metallschichten 44 jeweils einstückig ausgebildet sein. Alternativ dazu können die ersten Metallschichten 44 mittels des Schritts S2 bereitgestellt werden. Die ersten Metallschichten 44 können so ausgebildet werden, dass sie jeweils die erste Schichtausnehmung zum Aufnehmen des Rotors 24 aufweisen.

In einem optionalen Schritt S12, können die zweiten Metallschichten 36 bereitgestellt werden, indem die mehreren zweiten Metallsegmente 42 ausgebildet und zusammengesetzt werden, die gemeinsam die entsprechende zweite Metallschicht 36 bilden. Die zweiten Metallsegmente 42 können beispielsweise aus entsprechenden Metallblechen ausgestanzt, ausgefräst, ausgesägt oder ausgeschnitten werden. Der Schritt S6 kann insbesondere dann ausgeführt werden, wenn die zweiten Metallschichten 36 aus den zweiten Metallsegmenten 42 zusammengesetzt werden.

In einem Schritt S14 können mehrere der zweiten Metallschichten 36 bereitgestellt werden. Die zweiten Metallschichten 36 können beispielsweise aus entsprechenden Metallblechen ausgestanzt, ausgefräst, ausgesägt oder ausgeschnitten werden. In diesem Fall können die zweiten Metallschichten 36 jeweils einstückig ausgebildet sein. Alternativ dazu können die zweiten Metallschichten 36 mittels des Schritts S6 bereitgestellt werden. Die zweiten Metallschichten 36 können so ausgebildet werden, dass sie jeweils die zweite Schichtausnehmung zum Aufnehmen des Rotors 24 aufweisen.

Die zweiten Metallschichten 36 können jeweils die zweite Schichtausnehmung zum Aufnehmen des Rotors 24 aufweisen, deren Grösse und Form der Grösse und Form der ersten Schichtausnehmungen entspricht. Die zweiten Metallschichten 36 können so ausgebildet werden, dass sie zumindest bereichsweise einen grösseren Aussendurchmesser als die ersten Metallschichten 44 aufweisen.

In einem Schritt S16 können die ersten und die zweiten Metallschichten 44, 36 in Richtung der Drehachse 28 alternierend so hintereinander angeordnet werden, dass deren Schichtausnehmungen zueinander deckungsgleich sind, wobei die Bereiche, in denen die zweiten Metallschichten 36 den grösseren Aussendurchmesser als die ersten Metallschichten 44 aufweisen, die Kühlrippen 30 bilden. Die aneinander angeordneten ersten und die zweiten Metallschichten 44, 36 bilden gemeinsam den Statorkern 31 und die Kühlrippen 30 des Stators 22. Die ersten und die zweiten Metallschichten 44, 36 können unmittelbar aneinander angeordnet werden.

Falls die Metallschichten 44, 36 aus den entsprechenden Metallsegmenten 40, 42 zusammengesetzt werden, können die Metallschichten 44, 36 zu aneinander angeordnet werden, dass die ersten Metallsegmente 40 in Umfangsrichtung so zu den zweiten Metallsegmenten 42 versetzt angeordnet sind, dass die Schnittstellen zwischen den ersten Metallsegmenten 40 zu den Schnittstellen zwischen den zweiten Metallsegmenten 42 versetzt sind.

Abschliessend können gegebenenfalls die Statorwicklungen an dem Stator 22 befestigt werden, insbesondere in den Wicklungsaufnahmen 38.

Abschliessend wird darauf hingewiesen, dass Begriffe wie "aufweisend", "umfassend" etc. keine anderen Elemente oder Schritte ausschliessen und Begriffe wie "eine" oder "ein" keine Vielzahl ausschliessen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer der obigen Ausführungsbeispiele verwendet werden können. Bezugszeichen in den Ansprüchen sind nicht als Einschränkung anzusehen.

## Patentansprüche

1. Aufzugsanlage (50) umfassend:
- einen Aufzugsschacht (52);
- einen Fahrkorb (54), der der in dem Aufzugsschacht (52) angeordnet ist;
- mindestens ein Gegengewicht, das in dem Aufzugschacht (52) angeordnet ist und über mindestens ein Tragmittel (56) mit dem Fahrkorb (54) gekoppelt ist; mindestens ein Aufzugsantriebe (20); wobei der Aufzugsantrieb (20);
wobei das mindestens eine Tragmittel (56) über den Aufzugsantriebs (20) so verläuft, dass das Tragmittel (56) mittels des Aufzugantriebs (20) bewegbar ist, so dass der Fahrkorb (54) und das mindestens eine Gegengewicht mittels Betreibens des Aufzugantriebs (20) vertikal verlagerbar ist; und
- eine Bremse mittels der der Fahrkorb (54) und/oder das Gegengewicht abbremsbar und/oder feststellbar ist.

2. Aufzugsanlage (50), wobei der Aufzugsantrieb (20) einen gehäuselosen Stator (22) umfasst, der gehäuselose Stator (22) aufweisend:
einen Statorkern (31), der eine Statorausnehmung (29) zum Aufnehmen eines Rotors (24) des Aufzugsantirebs (20) aufweist, und
eine oder mehrere Kühlrippen (30), die an einer Aussenfläche des Statorkerns (31) angeordnet sind.

3. Aufzugsanlage (50) Anspruch 2, wobei
die Kühlrippen (30) unmittelbar an dem Statorkern (31) angeordnet sind.

4. Aufzugsanlage (50) nach einem der Ansprüche 2 oder 3, wobei
die Statorausnehmung (29) rotationssymmetrisch zu einer Drehachse (28) des Aufzugsantriebs (20) ist, und
die Kühlrippen (30) so ausgebildet und/oder angeordnet sind, dass sie sich senkrecht zu der Drehachse (28) erstrecken.

5. Aufzugsanlage (50) nach einem der Ansprüche 2 bis 4, wobei
der Statorkern (31) oder zumindest Teile des Statorkerns (31) und die Kühlrippen (30) einstückig ausgebildet sind.

6. Aufzugsanlage (50) nach einem der Ansprüche 2 bis 5, wobei
der Stator (22) mehrere Metallschichten (44, 36) aufweist, die gemeinsam den Statorkern (31) und die Kühlrippen (30) bilden,
die Metallschichten (44, 36) jeweils eine Schichtausnehmung aufweisen,
die Metallschichten (44, 36) in Richtung der Drehachse (28) alternierend so hintereinander angeordnet sind, dass die Schichtausnehmung zueinander deckungsgleich sind und gemeinsam die Statorausnehmung (29) bilden,
zumindest jede zweite der Metallschichten (44, 36) zumindest bereichsweise einen grösseren Aussendurchmesser als eine entsprechende benachbarte der Metallschichten (44, 36) aufweist, und
die Bereiche, in denen die Metallschichten (44, 36) den grösseren Aussendurchmesser als die entsprechenden benachbarten Metallschichten (44, 36) aufweisen, die Kühlrippen (30) bilden.

7. Aufzugsanlage (50) nach Anspruch 6, wobei
die Metallschichten (44, 36) jeweils unmittelbar aneinander angeordnet sind.

8. Aufzugsanlage (50) nach einem der Ansprüche 6 oder 7, wobei
die Metallschichten (44, 36) jeweils mehrere Metallsegmente (40, 42) aufweisen oder aus diesen gebildet sind.

9. Aufzugsanlage (50) nach Anspruch 8, wobei
die Metallsegmente (40, 42) einer der Metallschichten (44, 36) in Umfangsrichtung so zu den Metallsegmenten (40, 42) einer benachbarten der entsprechenden Metallschichten (44, 36) versetzt angeordnet sind, dass Schnittstellen zwischen den Metallsegmenten (40, 42) der einen der Metallschichten (44, 36) zu Schnittstellen zwischen den Metallsegmenten (40, 42) der entsprechenden benachbarten Metallschicht (44, 36) versetzt sind.

10. Aufzugsanlage (50) nach einem der Ansprüche 6 bis 9, wobei
die Metallschichten (44, 36) erste Metallschichten (44) und zweite Metallschichten (36) aufweisen, die alternierend angeordnet sind,
die zweiten Metallschichten (36) zumindest bereichsweise einen grösseren Aussendurchmesser als die ersten Metallschichten (44) aufweisen, und
die Bereiche, in denen die zweiten Metallschichten (36) den grösseren Aussendurchmesser als die ersten Metallschichten (44) aufweisen, die Kühlrippen (30) bilden.

11. Aufzugsanlage (50) nach einem der Ansprüche 6 bis 10, wobei
die Metallschichten (44, 36) identisch ausgebildet sind und jeweils Bereiche mit einem ersten Aussendurchmesser und Bereiche mit einem zweiten Aussendurchmesser aufweisen, wobei der zweite Aussendurchmesser grösser ist als der erste Aussendurchmesser, und
die Metallschichten (44, 36) so aneinander angeordnet sind, dass die Bereiche mit den ersten Aussendurchmessern einer der Metallschichten (44, 36) in Richtung der Drehachse (28) neben Bereichen mit den zweiten Aussendurchmessern einer entsprechenden benachbarten der Metallschichten (44, 36) angeordnet sind, wobei durch die Bereiche mit den zweiten Aussendurchmessern die Kühlrippen (30) gebildet sind.

12. Aufzugsanlage (50), weiter aufweisend:
einen Rotor (24), der um eine Drehachse (28) des Aufzugsantriebs (20) drehbar gelagert ist; und
wobei der Rotor (24) in einer Statorausnehmung (29) des Stators (22) drehbar angeordnet ist.

13. Aufzugsanalge (50) nach Anspruch 12, wobei
der Rotor (24) mehrere Flügel (46) aufweist, die zwischen der Drehachse (28) und einem Aussenumfang des Rotors (24) angeordnet sind und die dazu ausgebildet sind, Luft hin zu dem Stator (22) zu bewegen.

14. Verfahren zum Herstellen einer Aufzugsanlage (50) und deren Aufzugsantrieb (20), das Verfahren aufweisend:
Bereitstellen mehrerer Metallschichten (44, 36), die jeweils eine Schichtausnehmung aufweisen; und
Anordnen der Metallschichten (44, 36) so hintereinander, dass die Schichtausnehmungen zueinander deckungsgleich sind und gemeinsam eine Statorausnehmung (29) zum Aufnehmen eines Rotors (24) des Aufzugsantriebs (20) bilden,
wobei zumindest jede zweite der Metallschichten (44, 36) zumindest bereichsweise einen grösseren Aussendurchmesser als eine entsprechende benachbarte der Metallschichten (44, 36) aufweist, wobei die Bereiche, in denen die Metallschichten (44, 36) den grösseren Aussendurchmesser als die entsprechenden benachbarten Metallschichten (44, 36) aufweisen, Kühlrippen (30) des Stators (22) bilden und die aneinander angeordneten Metallschichten (44, 36) gemeinsam einen Statorkern (31) des Stators (22) bilden.

15. Verfahren nach Anspruch 14, wobei
die Metallschichten (44, 36) erste Metallschichten (44) und zweite Metallschichten (36) aufweisen, die beim hintereinander Anordnen der Metallschichten (44, 36) alternierend angeordnet werden,
die zweiten Metallschichten (36) zumindest bereichsweise einen grösseren Aussendurchmesser als die ersten Metallschichten (44) aufweisen, und
die Bereiche, in denen die zweiten Metallschichten (36) den grösseren Aussendurchmesser als die ersten Metallschichten (44) aufweisen, die Kühlrippen (30) bilden und/oder wobei
die Metallschichten (44, 36) identisch ausgebildet sind und jeweils Bereiche mit einem ersten Aussendurchmesser und Bereiche mit einem zweiten Aussendurchmesser aufweisen, wobei der zweite Aussendurchmesser grösser ist als der erste Aussendurchmesser, und
die Metallschichten (44, 36) beim hintereinander Anordnen der Metallschichten (44, 36) so angeordnet werden, dass die Bereiche mit den ersten Aussendurchmessern einer der Metallschichten (44, 36) in Richtung der Drehachse (28) neben Bereichen mit den zweiten Aussendurchmessern einer entsprechenden benachbarten der Metallschichten (44, 36) angeordnet sind, wobei durch die Bereiche mit den zweiten Aussendurchmessern die Kühlrippen (30) gebildet sind.
